# EUROPÄISCHE PATENTANMELDUNG

(11) **EP 4 302 605 A1**
(43) Veröffentlichungstag der Anmeldung: **10.01.2024**
(21) Anmeldenummer: 22182947.6
(22) Anmeldetag: 05.07.2022
(51) Int. Cl.: A22C 5/00

(54) **VORRICHTUNG ZUR PRODUKTION VON NAHRUNGSMITTELN MIT BERÜHRUNGSLOSER EINGABEEINRICHTUNG**

(71) Anmelder: Albert Handtmann Maschinenfabrik GmbH & Co. KG, 88400 Biberach (DE)
(72) Erfinder: Zimmermann, Robert, 88400 Biberach (DE)
(74) Vertreter: Grünecker Patent- und Rechtsanwälte PartG mbB

(57) **Zusammenfassung**

Die Erfindung betrifft eine Vorrichtung zur Nahrungsmittelproduktion, insbesondere eine Füllmaschine mit einer Steuerung, die zum Bedienen der Vorrichtung mit einer Eingabeeinrichtung verbunden ist. Dabei ist die Eingabeeinrichtung als berührungslose Eingabeeinrichtung ausgebildet.

## Beschreibung

Die Erfindung betrifft eine Vorrichtung zur Produktion von Nahrungsmitteln gemäß dem Oberbegriff des Anspruchs 1.

Solche Vorrichtungen zur Nahrungsmittelproduktion, z.B. Füllmaschinen, werden häufig über Eingabeeinheiten mit kapazitiven oder resistiven Touch-Displays bedient, bzw. gesteuert. Auch Vorsatzgeräte, wie beispielsweise Waagen, Abdrehlinien, Aufhängeeinrichtungen, können über entsprechende Eingabeeinheiten bedient werden. Solche Eingabeeinheiten müssen für ein entspanntes und sicheres Arbeiten ergonomisch und gut einsehbar angebracht sein. Dabei ist oft ein geneigter Einbau des Displays notwendig oder sogar ein separates Einbaugehäuse. Beide Varianten sind kostspielig und haben Nachteile bei der Reinigung. Oft ist auch bei den unterschiedlichen Vorrichtungen kein Raum für eine entsprechend ergonomische Anordnung gegeben.

Die Bedienung erfolgt über den Bediener durch Betätigen des Touch-Displays mit seinen Fingern. Insbesondere im Bereich der Nahrungsmittelherstellung müssen Bediener aus Hygienegründen oder zum Arbeitsschutz Handschuhe tragen, wobei Touch-Displays oft nur unzuverlässig reagieren. Bei der Betätigung mittels Finger, selbst wenn Handschuhe getragen werden, kommt es dabei oftmals zu Verschmutzungen und Kontaminationen. Gerade bei Füllmaschinen mit denen hauptsächlich pastöse Massen, z.B. Brät abgefüllt werden, kommt es zu Verschmutzung durch die pastösen Massen und z.B. Wasser und letztlich zur Beschädigung des Displays. Auch können auf diese Art Krankheitserreger zwischen Bedienern und über diese auch zum Produkt übertragen werden.

Hiervon ausgehend liegt der vorliegenden Erfindung die Aufgabe zugrunde, eine Vorrichtung zur Produktion von Nahrungsmitteln bereitzustellen, die eine ergonomische, hygienische und platzsparende Bedienung der Maschine ermöglicht.

Erfindungsgemäß wird diese Aufgabe durch die Merkmale des Anspruchs 1 gelöst.

Erfindungsgemäß wird diese Aufgabe durch eine Vorrichtung zur Produktion von Nahrungsmitteln, insbesondere durch eine Füllmaschine gelöst mit einer Steuerung, die zum Bedienen der Vorrichtung mit einer berührungslosen Eingabeeinrichtung verbunden ist.

Unter berührungsloser Eingabeeinrichtung versteht man eine Einrichtung, die ermöglicht, ohne ein Display oder eine Tastatur zu berühren Befehle und Werte einzugeben, die an die Steuerung weitergeleitet werden. Die berührungslose Eingabeeinrichtung kann also als Anzeige, d.h. Display und Bedieneinheit d.h. Eingabeterminal ausgebildet sein.

Dadurch, dass die Eingabeeinrichtung als berührungslose Eingabeeinrichtung ausgebildet ist, kann wirksam eine Verschmutzung und Kontamination der Eingabeeinrichtung verhindert werden, was insbesondere im Bereich der Nahrungsmittelproduktion wesentlich ist. Die berührungslose Eingabeeinrichtung kann also nicht beschädigt werden, da die virtuelle Bedieneroberfläche unempfindlich ist gegen Schmutz, Wasser und mechanische Einwirkungen. Da die Eingabeeinrichtung lediglich eine Projektion im Raum ist, kann der Bediener sich nicht daran stoßen und verletzen.

Auch eine Übertragung von Krankheitserregern kann verhindert werden. Darüber hinaus ergibt sich der Vorteil, dass auch bei geringem Raumangebot die Eingabeeinrichtung an einem gut einsehbaren Ort ergonomisch angebracht werden kann. Zum Beispiel kann die berührungslose Eingabeeinrichtung auch in einem Bereich angeordnet sein, wo kein Platz für beispielsweise ein Touch-Display vorhanden ist, weil z.B. Rauchstöcke angehoben werden müssen, Darmraupen ausgetauscht werden müssen, bzw. mechanische Arbeiten notwendig sind. Eine berührungslose Eingabeeinrichtung ermöglicht aber, dass man sich oder Werkzeuge bei mechanischen Arbeiten einfach durch die virtuelle Bedieneroberfläche hindurchbewegen kann.

Darüber hinaus ergibt sich eine größere Zuverlässigkeit bei der Eingabe, insbesondere dann, wenn klobige Arbeitshandschuhe getragen werden müssen.

Es ist besonders vorteilhaft, wenn die Eingabeeinrichtung eine Projektionseinrichtung umfasst zum Erzeugen einer virtuellen Bedieneroberfläche. Auf dieser virtuellen Bedieneroberfläche kann der Bediener dann die Vorrichtung bedienen und steuern, z.B. auch Parameter eingeben und abfragen. Vorteilhafterweise umfasst die Projektionseinrichtung eine Bildquelle, insbesondere ein Display, z.B. LCD-Display, sowie eine Platte, die von der Bildquelle diffus ausgehende Lichtstrahlen zu dem virtuellen Bild der Bedieneroberfläche bündelt.

Da die virtuelle Bedieneroberfläche ein Abbild der Bildquelle, d.h., des Displays ist, können sich verändernde Parameter und Einstellungen dargestellt werden. Dabei weist die Steuerung vorzugsweise mindestens eine Schnittstelle auf, um veränderbare Videosignale zur Bildquelle, d.h. zum Display, insbesondere LCD-Display zu senden.

Das bedeutet, dass die virtuelle Eingabeeinrichtung einfach nachgerüstet werden kann, wenn die Steuerung eine Schnittstelle zum Ausgeben von Videosignalen aufweist. Dabei können die Signale entweder drahtlos oder aber über eine drahtgebundene Verbindung, z.B. über eine HDMI-Schnittstelle ausgegeben werden.

Vorteilhafterweise weist die Vorrichtung zur Produktion von Nahrungsmitteln eine Sensoreinrichtung auf, die derart ausgebildet und angeordnet ist, dass eine berührungslose Eingabe durch einen Finger oder Gegenstand und/oder eine Gestensteuerung (z.B. ein "Wischen") erfassbar ist und entsprechende Signale an die Steuerung gesendet werden können.

Ein entsprechender Sensor kann beispielsweise als IR-Sensor-Einrichtung ausgebildet sein, die ein Infrarotstrahlenfeld erzeugt. Durch Erfassen beispielsweise der Reflexion der IR Strahlung an dem in den Strahlengang eingebrachten Finger und/oder Gegenstand, kann sowohl die Position als auch eine Bewegung im Strahlengang detektiert werden.

Diese Position entspricht dann einer bestimmten Position der virtuellen Bedieneroberfläche. Es ist aber auch möglich, dass die Sensoreinrichtung beispielsweise eine Kamera umfasst, über die die berührungslose Eingabe erfassbar ist.

Gemäß einer bevorzugten Ausführungsform weist die Vorrichtung zur Nahrungsmittelproduktion mehrere berührungslose Eingabeeinrichtungen an unterschiedlichen Positionen auf, die vorzugsweise mit der Steuerung verbunden sind.

Somit ist es möglich, dass, insbesondere bei einer längeren Verarbeitungslinie dem Bediener an unterschiedlichen Stellen berührungslose Eingabeeinrichtungen zur Verfügung stehen. Somit hat der Bediener von unterschiedlichen Stellen aus einen Überblick über den laufenden Prozess und kann gegebenenfalls sofort agieren und entsprechende Eingaben machen, ohne eine lange Strecke zu dem nächsten Display zurückzulegen. Vorteilhafterweise sind die Eingabeeinrichtungen mit der Steuerung der Vorrichtung verbunden, wobei vorzugsweise alle Eingabeeinrichtungen die gleiche virtuelle Bedieneroberfläche d.h. den gleichen "Bildschirm" zeigen. Dabei können die Eingabeeinrichtungen direkt mit der Steuerung verbunden sein oder beispielsweise über andere Steuereinheiten oder andere Eingabeeinrichtungen. Es ist auch möglich, dass sich die Bedieneroberflächen sich unterscheiden - z.B. angepasst an Ihre Position sind.

Gemäß einer bevorzugten Ausführungsform ist die Vorrichtung eine Füllmaschine mit mindestens einem Vorsatzgerät insbesondere aus folgender Gruppe: Abdreheinrichtung, Clipper, Aufhängeeinrichtung, Wiegeeinrichtung, Form- und Trenneinrichtung, Transporteinrichtung, Sortiereinrichtung, Verpackungseinrichtung, Roboter, etc..

Gemäß einem bevorzugten Ausführungsbeispiel ist die Füllmaschine derart ausgebildet, dass zusätzlich zur berührungslosen Eingabeeinrichtung an der Füllmaschine das mindestens eine Vorsatzgerät eine berührungslose Eingabeeinrichtung aufweist, die mit der Steuerung der Füllmaschine verbunden ist. Das heißt, dass die berührungslose Eingabeeinheit eines Vorsatzgerätes die Videosignale über die Steuerung der Vorrichtung erhält, d.h. die Bildquelle entsprechend angesteuert wird. Die berührungslose Eingabeeinheit des Vorsatzgeräts kann die Videosignale aber auch über ihre eigene Steuerung erhalten, die aber wiederum mit der Steuerung der Füllmaschine verbunden sein kann.

Somit kann sichergestellt werden, dass mehrere Eingabeeinrichtungen die gleichen Videosignale für ihre Bildquelle, d.h., ihr Display, insbesondere LCD-Display erhalten, derart, dass es an mehreren Stellen der Vorrichtung eine identische oder an die jeweiligen Anforderungen des jeweiligen Vorsatzgeräts angepasste Bedieneroberfläche gibt.

D.h., dass die jeweiligen Bildquellen entweder gleiche Videosignale erhalten oder unterschiedliche Videosignale.

Gemäß einer bevorzugten Ausführungsform weist die Füllmaschine und/oder ein Vorsatzgerät an in Transportrichtung T betrachtet gegenüberliegenden Seiten jeweils eine berührungslose Eingabeeinrichtung auf. Somit kann an einem Vorsatzgerät, z.B. einer Aufhängeeinrichtung von zwei gegenüberliegenden Seiten her gearbeitet werden.

Gemäß einer bevorzugten Ausführungsform ist der Neigungswinkel der virtuellen Bedieneroberfläche relativ zu einer horizontalen Ebene veränderbar. Bei geeigneter Ausführung lässt sich auch der Winkel um die vertikale Achse passend zur Position des Bedieners einstellen.

Die vorliegende Erfindung wird nachfolgend unter Bezugnahme der folgenden Figuren näher erläutert:
Figuren 1a-1d zeigen schematisch das Grundprinzip der erfindungsgemäßen Vorrichtung anhand einer Füllmaschine.
Figur 2 zeigt schematisch eine Projektionseinrichtung zum Herstellen einer virtuellen Bedieneroberfläche gemäß der vorliegenden Erfindung.
Figur 3 zeigt in perspektivischer Darstellung eine Füllmaschine mit mehreren berührungslosen Eingabeeinrichtungen gemäß der vorliegenden Erfindung.
Figur 4 zeigt schematisch die Steuerung einer Nahrungsmittelmaschine mit mehreren berührungslosen Eingabeeinrichtungen.
Figur 5 zeigt schematisch eine Sensoreinrichtung gemäß der vorliegenden Erfindung.

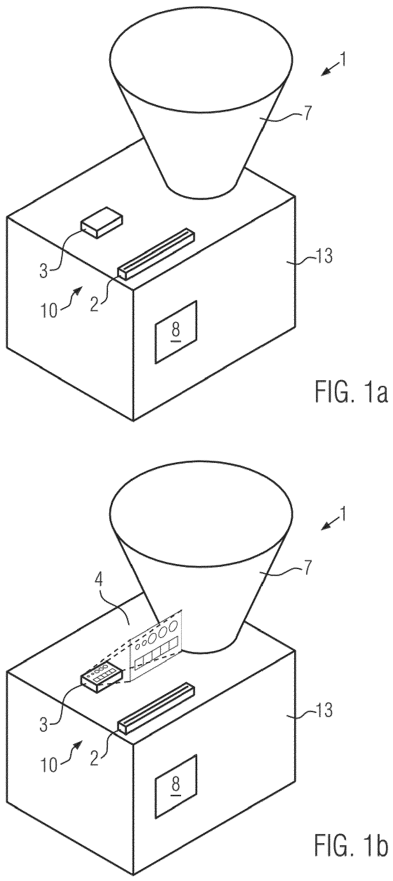

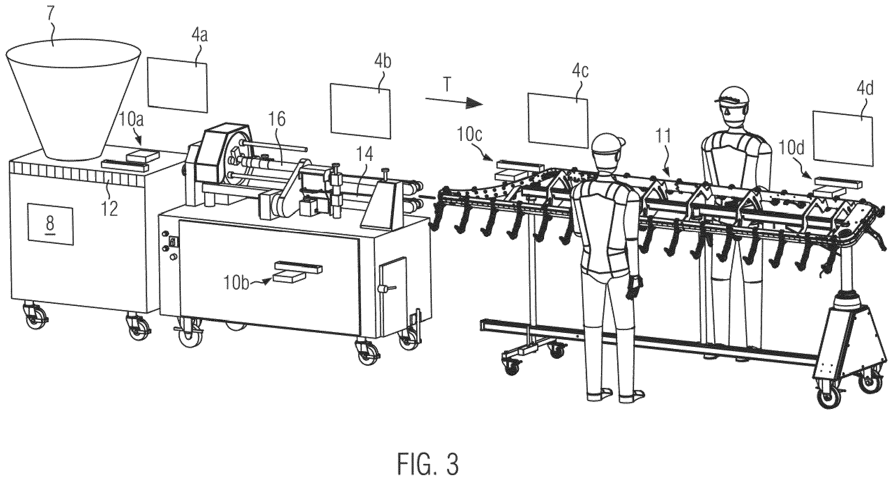

Figuren 1a - 1d und Fig.3 zeigen grob schematisch eine Vorrichtung zur Nahrungsmittelproduktion, hier in Form einer Füllmaschine. Eine Füllmaschine weist, wie aus den Figuren hervorgeht, z.B. einen Trichter 7 zum Einfüllen von abzufüllenden Lebensmitteln auf, sowie ein Maschinengehäuse 13. Unterhalb des Trichters 7 befindet sich ein Förderwerk 12, z.B. eine Flügelzellenpumpe 12 (siehe auch Figur 3), über die das Füllgut z.B. über ein Füllrohr 16 (Fig. 3) ausgestoßen werden kann, beispielsweise in Wursthüllen.

Die Füllmaschine weist eine Steuerung 8 auf, die zum Bedienen der Vorrichtung 1 mit einer Eingabeeinrichtung 10 verbunden ist. Bei der erfindungsgemäßen Eingabeeinrichtung 10 handelt es sich um eine berührungslose Eingabeeinrichtung.

Dazu weist die Eingabeeinrichtung 10 eine optische Projektionseinrichtung 3 zum Erzeugen einer virtuellen Bedieneroberfläche 4 auf.

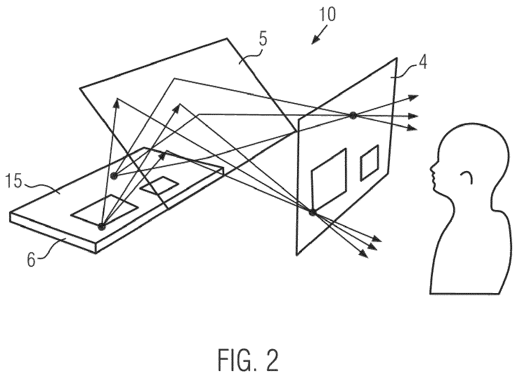

Figur 2 zeigt eine mögliche Ausführungsform zum Erzeugen eines entsprechenden virtuellen Bedieneroberflächenbildes 4. Die Projektionseinrichtung 3 umfasst eine Bildquelle 6 in Form eines Displays, insbesondere eines LCD-Displays, das eine Bedieneroberfläche zeigt, beispielsweise mit mehreren Eingabemöglichkeiten und Anzeigen etc., wie aus der Figur 2 hervorgeht. Die Bildquelle, bzw. das Display 6 ist mit der Steuerung 8 verbunden und empfängt von der Steuerung 8 entsprechende Bildsignale. Die von der Bildquelle diffus ausgehenden Lichtstrahlen treffen auf eine Platte 15 auf, die hier um z.B. 45° zu einer Ebene, in der das Display liegt, geneigt ist. Die Platte lenkt das einfallende Licht hier um weitere 45° um und bündelt die diffus ausgehenden Lichtstrahlen zu dem virtuellen Bild 4 der Bedieneroberfläche 4. Als Platte kann beispielsweise eine Holografieplatte mit mehreren Schichten von Mikrospiegeln verwendet werden, wie sie beispielsweise auch bei Head-up-Displays verwendet wird.

Der Bediener kann somit eine berührungslose Eingabe vornehmen, indem er wie bei einem normalen Display auf das virtuell angezeigte Tastenfeld tippt oder eine Gestensteuerung durchführt, wie z.B. das Wischen auf dem Bildschirm etc.

Dazu weist die Vorrichtung eine Sensoreinrichtung 2 auf, die derart ausgebildet und angeordnet ist, dass sie eine berührungslose Eingabe durch einen Finger oder Gegenstand und/oder eine Gestensteuerung erfassen kann.

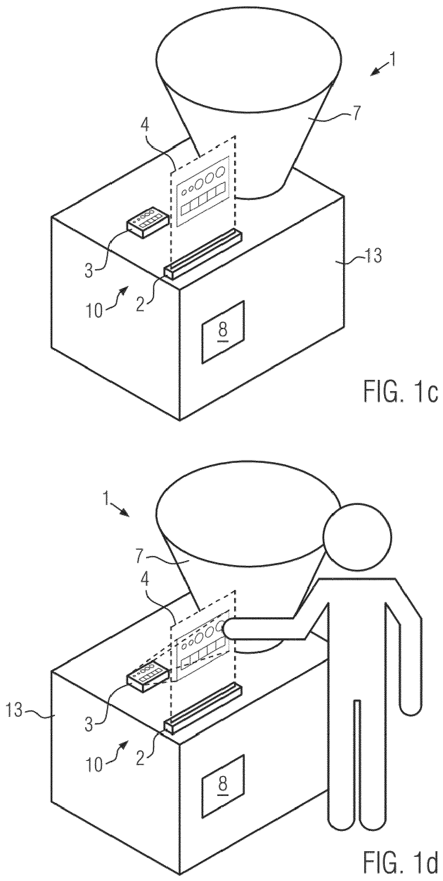

Figur 1a zeigt grob schematisch die Projektionseinrichtung 3 und die Sensoreinrichtung 2, wobei, wie in Figur 1b gezeigt ist, von der Projektionseinrichtung 3 die virtuelle Bedieneroberfläche 4 erzeugt wird. Grob schematisch wird in Figur 1c das "Abtasten" durch die Sensoreinrichtung 2 dargestellt. Figur 1d zeigt den Bediener an der berührungslosen Eingabeeinrichtung 10, wobei die virtuelle Bedienoberfläche 4 als Display und Bedieneinheit dient. Die Sensoreinrichtung kann beispielsweise eine IR-Sensoreinrichtung, einen Laserscanner oder eine Videokamera umfassen.

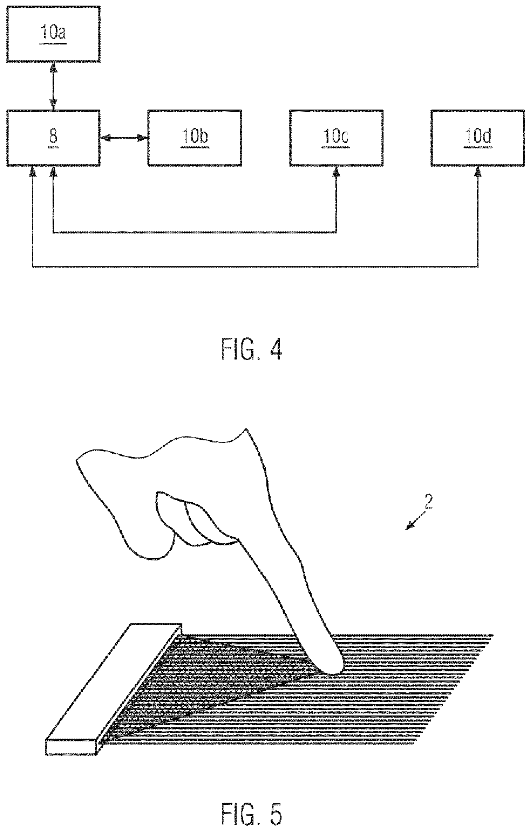

Figur 5 zeigt das Funktionsprinzip einer Infrarotsensoreinrichtung. Die Sensoreinrichtung 2 erzeugt ein Infrarot-Strahlenfeld. Dabei liegt z.B. die virtuelle Bedieneroberfläche 4 in der gleichen Ebene und an der gleichen Position wie das Infrarot-Strahlenfeld. Tippt jetzt ein Finger oder ein Gegenstand auf die virtuelle Bedieneroberfläche 4, wird der Strahlengang durchbrochen, d.h., IR-Strahlen werden zurückreflektiert und können erfasst werden. Somit kann sowohl die Position als auch eine Bewegung im Infrarot-Strahlenfeld detektiert werden. Diese Signale können dann an die Steuerung 8 gesendet werden.

Dies ist nur ein Beispiel für eine mögliche Erfassung der Eingabe.

Alternativ sind auch andere Sensoreinrichtungen denkbar, wie beispielsweise eine Videokamera, über die der Ort, an dem die virtuelle Bedieneroberfläche berührt wird oder eine Gestensteuerung detektiert werden kann und entsprechende Werte an die Steuerung weitergeleitet werden können.

Bei der in Figur 1a -1d gezeigten Ausführungsform ist die Anordnung der Projektionseinrichtung 3 und der Sensoreinrichtung 2 nur schematisch angedeutet. Die beiden Einrichtungen 2, 3 können in der Füllmaschine integriert sein, d.h. z.B. am oder im Gehäuse 13 derart befestigt werden, dass sich die virtuelle Bedieneroberfläche 4 an einem gewünschten Platz, hier z.B. vor dem Fülltrichter befindet. Dabei gibt es vorteilhafterweise keine mechanischen Beschränkungen für die Benutzeroberfläche 4, da, wenn notwendig, einfach durch die in den Raum projizierte Bedieneroberfläche 4 hindurchgegriffen werden kann. Die virtuelle Bedieneroberfläche 4 kann also frei im Raum an einer Stelle platziert werden, wo es vorteilhaft erscheint, ohne dass spezielle, die Arbeit des Bedieners behindernde Halterungen etc. notwendig sind. Aber auch eine Montage der Projektionseinrichtung 3 und der Sensoreinrichtung 2 an der Decke oder einer anderen Einrichtung ist möglich.

Figur 3 zeigt eine mögliche Ausführungsform, bei der die Vorrichtung 1 eine Füllmaschine mit mehreren sogenannten Vorsatzgeräten ist. Hier weist die Füllmaschine 1eine Steuerung 8, ein Förderwerk 12, sowie eine berührungslose Eingabeeinrichtung 10a mit einer virtuellen Bedieneroberfläche 4a auf. Die Füllmaschine fördert über das Förderwerk 12 Füllgut z.B. in ein Füllrohr, über der z.B. pastösen Masse in eine Wursthülle ausgestoßen werden kann. Der Füllmaschine ist in Transportrichtung eine Abdreheinrichtung 9 nachgeschaltet, über die ein Füllrohr 16 um seine Längsachse gedreht werden kann, um den erzeugten Wurststrang an den Abteilstellen abzudrehen. Die Abdreheinrichtung 9 weist hier auch noch eine Transporteinrichtung 14 mit gegenüberliegenden Förderbändern auf, zwischen denen z.B. die erzeugten Würste in Transportrichtung T gefördert werden.

Die Abdreheinrichtung 9 weist ebenfalls mindestens eine berührungslose Eingabeeinrichtung 10b auf, die ein virtuelles Bild, d.h. eine virtuelle Bedieneroberfläche 4b, erzeugt. Die virtuelle Bedieneroberfläche kann dabei z.B. unmittelbar über einem Füllrohr angeordnet werden, was mit einem feststehenden Display nicht einfach möglich wäre. Allgemein ergibt sich der Vorteil, dass der Raum nicht durch die virtuelle Bedieneroberfläche 4 b blockiert wird, da bei Arbeiten an der Abdreheinrichtung 9 einfach durch die Bedieneroberfläche hindurchgegriffen werden kann.

In Transportrichtung T betrachtet, befindet sich hinter der Abdreheinrichtung 9 eine Aufhängeeinrichtung 11, die umlaufende Haken aufweist, an denen z.B. Einzelwürste oder Wurstketten aufgehängt und transportiert werden. Über in entsprechende Wurstschlaufen eingreifende Rauchstöcke können dann die Wurstketten nach oben gehoben und abtransportiert werden. Auch die Aufhängeeinrichtung 11 weist mindestens eine berührungslose Eingabeeinrichtung 10c, d auf, hier zwei Eingabeeinrichtungen 10c und 10d auf gegenüberliegenden Seiten der Aufhängeeinrichtung, derart, dass von jeder Seite ein Bediener an der Vorrichtung arbeiten kann und die Bedieneroberfläche 4 im Blick hat. Da es sich bei den virtuellen Bedieneroberflächen nur um in den Raum projizierte Bilder handelt, stören diese nicht, wenn beispielsweise ein Rauchstock abgenommen werden muss und sich durch die Bildebene hindurchbewegt. Somit kann auch wirksam eine Beschädigung der Eingabeeinrichtung verhindert werden. Außerdem kommt es auch nicht zu einer Verschmutzung.

Figur 4 zeigt grob schematisch eine mögliche Ansteuerung der virtuellen Eingabeeinrichtungen wie sie z.B. in Zusammenhang mit der Fig.3 erläutert wurden. Über die Steuerung 8 der Füllmaschine 1 können z.B. über eine entsprechende Schnittstelle oder drahtlos Videosignale an die virtuelle Eingabeeinrichtung 10a, d.h., insbesondere deren Bildquelle, d.h. Display 6, gesendet werden, sodass über die Projektionseinrichtung 3 die virtuelle Bedieneroberfläche 4a im Bereich der Füllmaschine 1 erzeugt wird. Auch die virtuelle Eingabeeinrichtung 10b kann mit der Steuerung 8 der Füllmaschine 1 verbunden sein, derart, dass Videosignale an die entsprechende Bildquelle 6 zum Erzeugen der virtuellen Bedieneroberfläche 4b gesendet werden. Entsprechendes gilt auch für die virtuelle Eingabeeinrichtung(en) 10c und 10d der Aufhängeeinrichtung, die ebenfalls Videosignale von der Maschinensteuerung 8 der Füllmaschine 1 erhalten, um entsprechende virtuelle Bedieneroberflächen 4c und 4d zu erzeugen.

Vorteilhafterweise erhalten die Eingabeeinrichtungen 10a, 10b, 10c, 10d die gleichen Videosignale von der Steuerung 8, derart, dass an verschiedenen Stellen der Vorrichtung, d.h. der Produktionslinie die gleiche Bedieneroberfläche 4 betrachtet werden kann. Das bedeutet z.B. ebenfalls, dass, wenn an einer virtuellen Eingabeeinrichtung 10 eine Änderung eingegeben wird, eine entsprechende Änderung dann auch in den anderen Bedieneroberflächen 4 erkennbar ist.

Es ist aber auch möglich, dass die Steuerung 8 der Füllmaschine 1 unterschiedliche Videosignale an die unterschiedlichen virtuellen Eingabeeinrichtungen 10a, 10b, 10c, 10d sendet, wobei diese Videosignale angepasst sind an die Funktionen der entsprechenden Vorsatzgeräte. Bei dem in Figur 4 gezeigten Ausführungsbeispiel ist es nicht zwingend notwendig, dass die Bildquellen 6, bzw. Displays 6 direkt mit der Steuerung 8 der Füllmaschine verbunden sind. Es ist auch möglich, dass die Steuerung 8 mit entsprechenden Steuerungen der Vorsatzgeräte verbunden ist, über die dann die entsprechenden Bildquellen, bzw. Displays 6 mit entsprechenden Videosignalen angesteuert werden.

Es ist auch möglich, dass die Neigung der virtuellen Bedieneroberfläche 4 relativ zu einer horizontalen Ebene einstellbar ist. Hierzu kann die Projektionseinrichtung 3 und die Sensoreinrichtung 2 auf einem gemeinsamen Träger montiert sein, der um eine horizontale Achse schwenkbar angeordnet ist.

Bei entsprechender Ausführung lässt sich alternativ oder gleichzeitig auch der Winkel zur vertikalen Achse einstellen.

Dabei kann z.B. ein Bewegungsmechanismus, z.B. eine mechanische Kopplung in Form eines Zahnrad-, Zahnriemen- oder Gelenkgetriebes vorgesehen sein, der die Neigung der Projektionseinrichtung 3, d.h. hier der Bildquelle 6 und der Platte 5 relativ zur horizontalen Ebene (und/oder relativ zu einer vertikalen Ebene, die z.B. senkrecht zur horizontalen Ebene steht) ändert.

Gleichzeitig wird auch die Sensoreinrichtung 2 entsprechend synchron bewegt, so, dass die Projektionsebene und die Abtastebene deckungsgleich bleiben und ihren gemeinsamen Ursprungspunkt beibehalten. Dies kann durch den gleichen Bewegungsmechanismus oder einen gesonderten Bewegungsmechanismus erfolgen.

So kann ein zweiter Bewegungsmechanismus vorgesehen sein (insbesondere z.B. eine mechanische Kopplung in Form eines Zahnrad-, Zahnriemen- oder Gelenkgetriebes) der die Projektionseinrichtung 3, d.h. hier Bildquelle 6 und Platte 5 um eine vertikale Achse drehen und gleichzeitig auch die Sensoreinrichtung 2 entsprechend drehen kann.

Winkeländerungen z.B. um eine horizontale oder vertikale Achse können auch durch eine geeignete Anordnung und Bewegung von Strahlenführungselementen, wie z. B. Linsen und/oder Spiegel erreicht werden.

Die Erfindung wurde hier im Zusammenhang mit einer Abdreheinrichtung 9 sowie einer Aufhängeeinrichtung 11 näher erläutert, wobei die Füllmaschine auch zusätzlich oder alternativ z.B. die folgenden Vorsatzgeräte aufweisen kann: Clipper, Wiegeeinrichtung, Form- und Trenneinrichtung, Transporteinrichtung, Sortiereinrichtung, Verpackungseinrichtung, Roboter, etc..

## Patentansprüche

1. Vorrichtung zur Nahrungsmittelproduktion (1), insbesondere Füllmaschine (1) mit einer Steuerung (8), die zum Bedienen der Vorrichtung mit einer Eingabeeinrichtung (10) verbunden ist, **dadurch gekennzeichnet, dass** die Eingabeeinrichtung (10) als berührungslose Eingabeeinrichtung (10) ausgebildet ist.

2. Vorrichtung zur Nahrungsmittelproduktion (1) nach Anspruch 1, **dadurch gekennzeichnet, dass** die Eingabeeinrichtung (10) eine Projektionseinrichtung (3) zum Erzeugen einer virtuellen Bedieneroberfläche (4) aufweist.

3. Vorrichtung zur Nahrungsmittelproduktion (1) nach Anspruch 2, **dadurch gekennzeichnet, dass** die Projektionseinrichtung (3) eine Bildquelle (6), insbesondere ein Display, vorzugsweise ein LCD - Display aufweist, sowie eine Platte (5), die derart ausgestaltet ist, dass sie von der Bildquelle diffus ausgehende Lichtstrahlen zu dem virtuellen Bedieneroberflächenbild (4) bündelt.

4. Vorrichtung zur Nahrungsmittelproduktion (1) nach mindestens einem der vorhergehenden Ansprüche, **dadurch gekennzeichnet, dass** die Vorrichtung eine Sensoreinrichtung (2) aufweist, die derart ausgebildet und angeordnet ist, dass sie eine berührungslose Eingabe durch einen Finger oder Gegenstand und/oder eine Gestensteuerung erfassen kann.

5. Vorrichtung zur Nahrungsmittelproduktion (1) nach Anspruch 4, **dadurch gekennzeichnet, dass** die Sensoreinrichtung eine IR-Sensoreinrichtung oder eine Videokamera oder eine Laser-Sensoreinrichtung umfasst.

6. Vorrichtung zur Nahrungsmittelproduktion (1), **dadurch gekennzeichnet, dass** die Steuerung (8) mindestens eine Schnittstelle aufweist, um veränderbare Videosignale zur Bildquelle (4), insbesondere zum Display (4) zu senden.

7. Vorrichtung zur Nahrungsmittelproduktion (1) nach mindestens einem der Ansprüche 1-6, **dadurch gekennzeichnet, dass** die Vorrichtung (1) zur Nahrungsmittelproduktion mehrere berührungslose Eingabeeinrichtungen (10) an unterschiedlichen Positionen aufweist, die mit der Steuerung (8) verbunden sind.

8. Vorrichtung zur Nahrungsmittelproduktion (1) nach mindestens einem der Ansprüche 1-7, **dadurch gekennzeichnet, dass** die Vorrichtung (1) eine Füllmaschine (1) ist mit mindestens einem Vorsatzgerät, insbesondere mit mindestens einem Vorsatzgerät aus folgender Gruppe: Abdreheinrichtung (9), Clipper, Aufhängeeinrichtung (11), Wiegeeinrichtung, Form- und Trenneinrichtung, Transporteinrichtung, Sortiereinrichtung, Verpackungseinrichtung, Roboter, etc..

9. Vorrichtung zur Nahrungsmittelproduktion (1) nach Anspruch 8, **dadurch gekennzeichnet, dass** die Füllmaschine derart ausgebildet ist, dass das mindestens eine Vorsatzgerät eine berührungslose Eingabeeinrichtung (10) aufweist, die insbesondere mit der Steuerung (8) der Füllmaschine verbunden ist.

10. Vorrichtung zur Nahrungsmittelproduktion (1) nach mindestens einem der Ansprüche 7-9, **dadurch gekennzeichnet, dass** die Vorrichtung derart ausgebildet ist, dass die jeweiligen Bildquellen (6), insbesondere das jeweilige Display (6) der Eingabeeinrichtungen (10) die gleichen Videosignale erhalten, derart, dass es an verschiedenen Stellen der Vorrichtung die gleiche Bedieneroberfläche (4) gibt oder unterschiedliche Videosignale.

11. Vorrichtung zur Nahrungsmittelproduktion (1) nach mindestens Anspruch 8, **dadurch gekennzeichnet, dass** die Füllmaschine und/oder ein Vorsatzgerät an in Transportrichtung (T) betrachtet gegenüberliegenden Seiten jeweils eine Eingabeeinrichtung 10 aufweist.

12. Vorrichtung zur Nahrungsmittelproduktion (1) nach mindestens einem der vorhergehenden Ansprüche, **dadurch gekennzeichnet, dass** der Neigungswinkel der virtuellen Bedieneroberfläche relativ zu einer horizontalen Ebene veränderbar ist und / oder um eine vertikale Achse drehbar ist.
